# EUROPÄISCHE PATENTANMELDUNG

(11) **EP 1 380 461 A1**
(43) Veröffentlichungstag der Anmeldung: **14.01.2004**
(21) Anmeldenummer: 03015157.5
(22) Anmeldetag: 04.07.2003
(51) Int. Cl.: B60K 15/067, B60K 15/07

(54) **Befestigungsvorrichtung für zwei benachbarte Behälter**

(30) Priorität: 08.07.2002 DE 10230634
(71) Anmelder: ADAM OPEL AG, 65423 Rüsselsheim (DE)
(72) Erfinder: Hürter, Helmut, Dipl.-Ing. (FH), 64572 Büttelborn (DE)

(57) **Zusammenfassung**

Die vorliegende Erfindung schafft eine Befestigungsvorrichtung (1) für zwei benachbarte Behälter (2, 4), wie beispielsweise Kraftstofftanks, Gasflaschen, oder dergleichen, die am Unterbau der Karosserie eines Kraftfahrzeuges befestigt werden sollen. Die beiden Behälter (2, 4) werden von wenigstens zwei den jeweiligen Behälter (2, 4) fixierenden Spannbändern (6) gehalten, die jeweils mit einem ersten von den Behältern (2, 4) wegweisenden Spannbandende (8) an bereits im Unterbau befindlichen ersten Montagepunkten befestigt sind. Diese ersten Montagepunkte liegen paarweise in Fahrzeuglängsrichtung zueinander fluchtend vor. Die Längsachse des jeweiligen Behälters (2, 4) ist vorzugsweise quer zur Fahrzeuglängsachse orientiert. Es ist erstmals vorgesehen, dass zwischen den beiden Behältern (2, 4) ein Spannbandmontageadapter (10) angeordnet ist. Dieser erstreckt sich parallel zur Längsachse wenigstens eines der Behälter (2, 4). Der Spannbandmontageadapter ist an in den Unterbau an tragfähigen Stellen einzubringenden zweiten Montagepunkten befestigt, welche zwischen den beiden äußeren ersten Montagepunkten und nicht mit diesen auf einer gemeinsamen Linie liegen. Dabei sind die jeweiligen zweiten nach innen zwischen die beiden Behälter (2, 4) weisenden Spannbandenden (14) derart an Spannbandmontageadapter (10) montiert, dass diese entlang der gemeinsamen Verbindungslinie (18) der äußeren ersten Montagepunkte im Wesentlichen versatzfrei miteinander fluchtend verlaufen.

## Beschreibung

Die vorliegende Erfindung betrifft eine Befestigungsvorrichtung für zwei benachbarte Behälter, wie beispielsweise Hochdruckbehälter, Kraftstofftanks, Gasflaschen oder dergleichen, zu deren Befestigung am Unterbau der Karosserie eines Kraftfahrzeuges, nach dem Oberbegriff des Anspruchs 1.

Zur Reduzierung des Schadstoffausstoßes von Kraftfahrzeugen wird in der Automobilindustrie verstärkt auf Fahrzeuge mit Erdgas als Treibstoff gesetzt. Derlei Fahrzeuge benötigen dann an Stelle des herkömmlichen Kraftstofftanks für Benzin oder Diesel entsprechende Behälter zur Aufnahme von Erdgas, wie beispielsweise Gasflaschen. Häufig werden zusätzlich sogenannte Benzin-Nottanks am Unterboden des Fahrzeugs mit vorgesehen, da bis heute eine flächendeckende Versorgung mit Erdgas-Tankstellen nicht gewährleistet ist und damit vermieden werden soll, dass ein Kraftfahrzeug auf offener Strecke aufgrund Treibstoffmangels liegen bleibt.

Aus der Praxis der Anmelderin ist eine Ausführungsform einer kombinierten Befestigungsvorrichtung bekannt geworden, bei der an Stelle des Original-Benzintankes zwei Gasflaschen sowie ein Benzin-Nottank am Unterboden des Fahrzeugs fixiert werden. Zur Befestigung dieser Behälter werden bei der Anmelderin die im Unterbau bereits vorhandenen Befestigungspunkte des ehemaligen Original-Benzintanks mitverwendet, da diese schon zweckentsprechend ausreichend tragfähig ausgeführt sind.

In dem aufgrund des Wegfalls des Original-Benzintankes frei gewordenen Bauraum direkt unter dem Fahrzeugunterbau sollen nunmehr zwei Behälter, wie beispielsweise eine Gasflasche und der Benzin-Nottank, untergebracht werden. Eine weitere Gasflasche kann beispielsweise in Fahrzeugrichtung hinter diesen beiden Behältern unterhalb des Kofferraumes separat mit eigenen Spannbändern befestigt werden.

Zur Befestigung der beiden benachbarten Behälter, insbesondere der einen Gasflasche und des Benzin-Nottanks, stehen bei der bisher aus der Praxis bekannten Ausführungsform der Anmelderin insgesamt vier Befestigungspunkte des entfallenen Original-Benzintankes zur Verfügung. Diese werden bei diesem Beispiel zur Befestigung von insgesamt vier Spannbändern benutzt, wobei pro Behälter zwei Spannbänder Verwendung finden. Dabei werden diese Spannbänder jeweils mit ihrem ersten, von den Behältern nach vorne oder nach hinten zum jeweiligen Fahrzeugende hin wegweisenden Spannbandende an den bereits im Unterbau befindlichen ersten Montagepunkten befestigt. Diese ersten Montagepunkte liegen paarweise in Fahrzeuglängsrichtung zueinander fluchtend vor, sie liegen also auf einer gedachten Linie. Die Längsachse des jeweiligen Behälters ist zudem vorzugsweise quer zur Fahrzeuglängsachse orientiert.

Zur Befestigung der zweiten Spannbandenden dieser vier verwendeten Spannbänder, die jeweils in den Raum zwischen den benachbarten Behältern hinein ragen, sind zusätzliche Befestigungspunkte erforderlich. Diese zusätzlichen Befestigungspunkte werden im Unterboden an bestimmten Stellen positioniert, die beispielsweise durch vorhandene Doppelsicken oder dergleichen andere Verstärkungen eine ausreichend belastbare Struktur bieten.

Eine völlige Neugestaltung der Unterbodengruppe oder des Unterbaus für eine entsprechende Optimierung der Befestigungspunkte von Anfang an scheidet wegen der damit verbundenen hohen Kosten bislang als Alternative aus.

Die im vorhandenen Unterbau zwischen den beiden Behältern verfügbaren Stellen mit einer ausreichenden Tragfähigkeit, die dann als Montagepunkte dienen könnten, liegen jedoch in aller Regel derart ungünstig, dass ein geradliniger, versatzfreier Spannbandverlauf ausgeschlossen ist.

Ein schräger Verlauf der vier Spannbänder bei direkter Nutzung der möglichen zweiten Montagepunkte hat jedoch den wesentlichen Nachteil, dass dann die Spannbänder nicht aus einem einfachen Bandmaterial hergestellt werden können, welches ansonsten lediglich abgelängt werden müsste. Sondern sie müssen vielmehr mit erheblichem Verschnitt aus einer wesentlich breiteren Platine ausgestanzt oder ausgelasert werden, was die Herstellungskosten einer vorgenannten Befestigungsvorrichtung zum Umrüsten eines herkömmlich mit einem Verbrennungsmotor ausgestatteten Kraftfahrzeuges auf den Betrieb mit Erdgas unrentabel macht.

Abgesehen davon ist bei einem schrägen Verlauf der Spannbänder keine optimale Fixierung der damit befestigten Behälter gewährleistet. Unerwünschte Dreh-, Pendel- oder Schwenkbewegungen der Behälter beim Auftreten bestimmter Grenzwerte überschreitender Verzögerungen oder Beschleunigungen sind dabei nicht auszuschließen.

Demzufolge ist es Aufgabe der vorliegenden Erfindung unter Vermeidung der vorstehend genannten Nachteile eine Befestigungsvorrichtung für zwei benachbarte Behälter vorzuschlagen, die eine optimale dauerhafte Fixierung der Behälter ermöglicht, als auch die kostengünstige Verwendung von Spannbändern aus herkömmlichem Bandmaterial erlaubt.

Diese Aufgabe wird gelöst durch die Merkmale des Anspruchs 1.

Dabei wird erfindungsgemäß eine Befestigungsvorrichtung für zwei benachbarte Behälter, wie beispielsweise Hochdruckgasbehälter, Kraftstofftanks, Gasflaschen, oder dergleichen, zu deren Befestigung am Unterbau der Karosserie eines Kraftfahrzeuges vorgeschlagen, mit wenigstens zwei den jeweiligen Behälter fixierenden Spannbändern, die jeweils mit einem ersten von den Behältern wegweisenden Spannbandende an bereits im Unterbau befindlichen ersten Montagepunkten befestigt sind, welche paarweise in Fahrzeuglängsrichtung zueinander fluchtend vorliegen, und wobei die Längsachse des jeweiligen Behälters vorzugsweise quer zur Fahrzeuglängsachse orientiert ist. Hierbei wird erstmals vorgeschlagen, dass zwischen den beiden Behältern ein Spannbandmontageadapter angeordnet ist, der sich parallel zur Längsachse wenigstens eines der Behälter erstreckt, und der an in den Unterbau an tragfähigen Stellen einzubringenden zweiten Montagepunkten befestigt ist, die zwischen den beiden äußeren ersten Befestigungspunkten und nicht mit diesen auf einer gemeinsamen Linie liegen, und dass die jeweiligen zweiten nach innen zwischen die beiden Behälter weisenden Spannbandenden derart am Spannbandmontageadapter montiert sind, dass diese entlang der gemeinsamen Verbindungslinie der äußeren ersten Befestigungspunkte im Wesentlichen versatzfrei miteinander fluchtend verlaufen.

Mit der erfindungsgemäßen Befestigungsvorrichtung ist es erstmals in vorteilhafter Weise möglich, einfache herkömmliche Spannbänder aus handelsüblichem Bandmaterial mit geradem Verlauf zu verwenden, was eine beachtliche Kostenreduzierung bei der Umrüstung von Fahrzeugen auf Erdgasbetrieb bedeutet. Ferner bietet die erstmalige Verwendung eines Spannbandmontageadapters den Vorteil, dass zum Ausbauen eines der beiden Behälter, der beispielsweise ein Benzin-Nottank sein kann, der andere Behälter nicht zwangsläufig mitausgebaut werden muss.

Die Verwendung eines Spannbandmontageadapters bietet darüber hinaus den Vorteil, dass selbiger optimal auf die in Abhängigkeit der Tragfähigkeit des Unterbaus festzulegenden zweiten Montagepunkte angepasst werden kann, so dass dieser bestmöglich am Unterbau fixierbar ist und zugleich über den Spannbandmontageadapter die Lage der Montagepunkte zur Befestigung der zweiten Enden der Spannbänder längs des Spannbandmontageadapters frei gewählt und dementsprechend vorteilhaft dahingehend optimiert werden kann, dass diese auf einer Linie mit den paarweise fluchtenden äußeren Montagepunkten liegen, an denen die ersten Spannbandenden befestigt sind.

Damit wird erstmalig und in vorteilhafter Weise ein weitestgehend versatzfrei miteinander fluchtender Verlauf der Spannbänder zur Fixierung der Behälter gewährleistet.

Dabei ist weiter von Vorteil, dass die nachträglich an tragfähigen Stellen in den Unterbau einzubringenden zweiten Montagepunkte hinsichtlich deren Tragfähigkeit selbst optimiert werden können, was zusätzlichen Gestaltungsspielraum eröffnet. So können beispielsweise in den Unterbau Löcher eingebracht werden, in die Schraubbolzen mit Verstärkungsplatten gesteckt werden, die sich ihrerseits auf der Innenseite des Unterbodens abstützen, so dass eine besonders tragfähige Montagestelle zur Befestigung des Spannbandmontageadapters entsteht.

Vorteilhafte Weiterbildungen der Erfindung ergeben sich aus den Merkmalen der Unteransprüche.

So kann der Spannbandmontageadapter beispielsweise als Profilblech, vorzugsweise als Winkelblech ausgebildet sein. Ein derart ausgestalteter Spannbandmontageadapter ist besonders kostengünstig beispielsweise durch einfaches Ablängen von der Stange herstellbar. Mit nachfolgenden Präge- oder Stanzschritten können dem Spannbandmontageadapter gegebenenfalls gewünschte Strukturen zugefügt werden, beispielsweise zur Erhöhung dessen Verwindungsfestigkeit oder dessen Stabilität. Die zur Aufnahme von Befestigungsmitteln erforderlichen Ausnehmungen können dabei problemlos mit ein- oder angebracht werden, so dass dessen Herstellung und Montage erneut kostengünstig und zudem in Serie erfolgen kann.

Gemäss einer weiter bevorzugten Ausführungsform weist der Spannbandmontageadapter an seinem nach unten vom Unterbau wegweisenden Rand Befestigungseinrichtungen auf, die vorzugsweise als Schlaufen ausgebildet sind. Diese Befestigungseinrichtungen dienen zur versatzfreien Montage der zweiten Spannbandenden. Insbesondere bei der Ausgestaltung als Schlaufen lassen sich die zweiten Spannbandenden möglichst einfach und doch lagegenau befestigen.

In einer weiter bevorzugten Ausführungsform sind die Befestigungseinrichtungen des Spannbandmontageadapters derart an dessen unteren Rand platziert, dass sie jeweils in einer Linie zu den paarweise fluchtenden ersten äußeren Montagepunkten zu liegen kommen. Dies verstärkt den vorstehend diskutierten Vorteil eines im Wesentlichen versatzfrei miteinander fluchtenden Verlauf der paarweise einander zugeordneten Spannbänder zur Fixierung der beiden benachbarten Behälter.

Entsprechend einer weiter bevorzugten Ausführungsform ist vorgesehen, dass ein, vorzugsweise zylindrischer, Verbindungsbolzen von der Schlaufe des Spannbandmontageadapters gehalten ist, der seinerseits mit entsprechenden Schlaufen an den zweiten nach innen zwischen die beiden Behälter weisenden Spannbandenden in Eingriff steht. Diese Befestigungsvariante ist einer Serienproduktion zugänglich, kann damit schnell und kostengünstig realisiert werden und ist in weiter vorteilhafter Weise geprägt durch geringe Materialkosten als auch einen gegen Null tendierenden Nachbearbeitungsaufwand, insbesondere wenn der Verbindungsbolzen beispielsweise als zylindrische Hülse ausgebildet ist.

Gemäss einer weiter bevorzugten Ausführungsform weist der Verbindungsbolzen eine senkrecht zu seiner Erstreckungsrichtung orientierte Gewindebohrung oder Mutter auf, in welche eine Spannschraube eingreift. Die Spannschraube greift dabei ihrerseits am zweiten Spannbandende eines der Spannbänder, vorzugsweise am Spannbandende des der Gasflasche zugeordneten Spannbandes, in ein entsprechendes Gewinde eines zweiten Verbindungsbolzen ein, der in der an diesem Spannbandende ausgebildeten Lasche um seine Längsachse drehbar gelagert ist.

Dabei können durch entsprechend an den jeweiligen Enden der Spannschraube und an den Gewindebohrungen angeordnete unterschiedliche Gewinderichtungen (Rechtsoder Linksgewinde) die Verbindungsbolzen durch einfaches Verdrehen der Spannschraube zu- oder gegeneinander bewegt und somit das Spannband zur Halterung der Gasflasche oder des Behälters entsprechend gespannt oder entspannt werden.

Mit dieser vorteilhaften Variante einer Befestigung des zweiten Spannbandendes mit dem vom Spannbandmontageadapter gehaltenen Verbindungsbolzen, wird in vorteilhafter Weise die aus Spannschlössern bekannte Befestigungsmimik übertragen, mittels der Zugkräfte in vorbestimmtem Umfang auf das Spannband eingeprägt werden können, so dass darüber der jeweilige Behälter optimal mit einer vorbestimmten Zugkraft fixiert werden kann.

Die Erfindung wird nachfolgend in Ausführungsbeispielen anhand der Figuren der Zeichnung näher erläutert. Es zeigt:
- Fig. 1: eine schematisch vereinfachte dreidimensionale Ansicht einer beispielhaften Ausführungsform der erfindungsgemäßen Befestigungsvorrichtung zur Fixierung eines hier als Benzin-Nottank ausgebildeten ersten Behälters und eines daneben angeordneten als Gasflasche ausgebildeten zweiten Behälters;
- Fig. 2: eine Ansicht von oben durch den nicht dargestellten Fahrzeugunterbau hindurch auf die dem Fahrzeugunterbau zugewandten oberen Flächen der Behälter der in Fig. 1 dargestellten Ausführungsform;
- Fig. 3: eine Ansicht in Fahrzeugrichtung von vorne auf die in Figuren 1 und 2 dargestellte Ausführungsform;
- Fig. 4: eine Seitenansicht (von der Beifahrerseite her betrachtet) der in Figuren 1 bis 3 dargestellten Ausführungsform;
- Fig. 5: ein Schnitt durch die mit der Schnittlinie A-A in Fig. 3 angedeutete Sektion; und
- Fig. 6: eine Seitenansicht der in Figuren 1 bis 5 dargestellten Ausführungsform von der Fahrerseite her betrachtet.

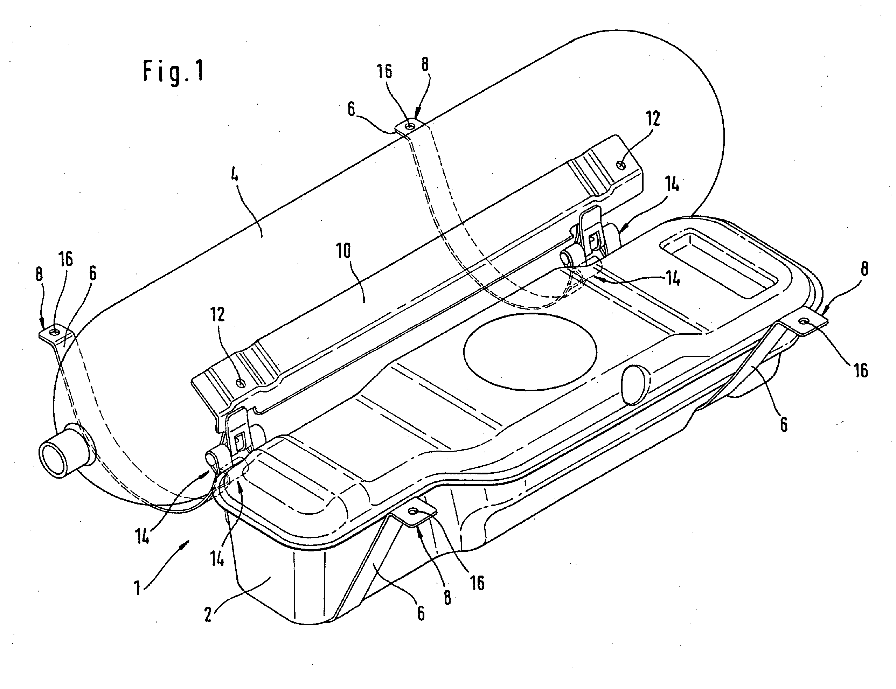

In Fig. 1 ist eine beispielhafte Ausführungsform einer erfindungsgemäßen Befestigungsvorrichtung 1 für zwei benachbarten Behälter 2 und 4, von denen der eine Behälter 2 beispielsweise als Benzin-Nottank ausgebildet und der andere Behälter 4 eine Gasflasche ist, in einer dreidimensionalen schematischen Ansicht dargestellt.

Die beiden benachbarten Behälter 2 und 4 werden vermittels der Befestigungsvorrichtung 1 an einem hier nicht näher dargestellten Unterbau der Karosserie eines Kraftfahrzeuges mit wenigstens zwei den jeweiligen Behälter 2 und 4 fixierenden Spannbändern 6 befestigt. Bei der hier dargestellten Ausführungsform kommen somit vier Spannbänder 6 zum Einsatz. Es sind aber auch alternative Ausführungsformen mit mehr Spannbänder denkbar. Die Spannbänder 6 sind mit einem ersten von den Behältern 2 bzw. 4 wegweisenden Spannbandende 8 an bereits im - hier nicht näher dargestellten - Unterbau befindlichen ersten Montagepunkten befestigt (wobei diese ersten Montagepunkte hier ebenfalls nicht veranschaulicht sind). Diese ersten Montagepunkte liegen paarweise in Fahrzeuglängsrichtung zueinander fluchtend vor. Die Längsachse des jeweiligen Behälters 2 bzw. 4 ist vorzugsweise quer zur Fahrzeuglängsachse orientiert.

Eine Orientierung der Behälter parallel zur Fahrzeuglängsachse ist nicht ausgeschlossen, die Praxis hat jedoch gezeigt, dass eine Orientierung quer zur Fahrzeuglängsachse die größeren Vorteile bietet. Bei einer Ausrichtung parallel zur Längsachse ist zur Vermeidung eines Durchrutschens der Behälter in Fahrzeugrichtung vor und hinter dem jeweiligen Behälter beispielsweise eine geeignete Arretierung oder eine Abstützung vorzusehen.

Zwischen den beiden Behältern 2 bzw. 4 ist ein Spannbandmontageadapter 10 angeordnet, der sich parallel zur Längsachse wenigstens eines der Behälter 2 bzw. 4 erstreckt. Der Spannbandmontageadapter 10 ist an in den Unterbau an tragfähigen Stellen nachträglich einzubringenden zweiten Montagepunkten befestigt, wie dies die entsprechenden Bohrungen 12 im Spannbandmontageadapter 10 symbolisieren, die zwischen den beiden äußeren ersten Montagepunkten und nicht mit diesen auf einer gemeinsamen Linie liegen. Die jeweiligen zweiten nach innen zwischen die beiden Behälter 2 bzw. 4 weisenden Spannbandenden 14 sind derart am Spannbandmontageadapter 10 montiert, dass diese entlang der gemeinsamen gedachten Verbindungslinie der äußeren ersten Montagepunkte, welche hier stellvertretend durch die entsprechenden Bohrungen 16 in den ersten Spannbandenden 8 symbolisiert sein sollen, im Wesentlichen versatzfrei miteinander fluchtend verlaufend.

Der Spannbandmontageadapter 10 kann beispielsweise als Profilblech oder vorzugsweise als entsprechend ausgeformtes Winkelblech ausgebildet sein.

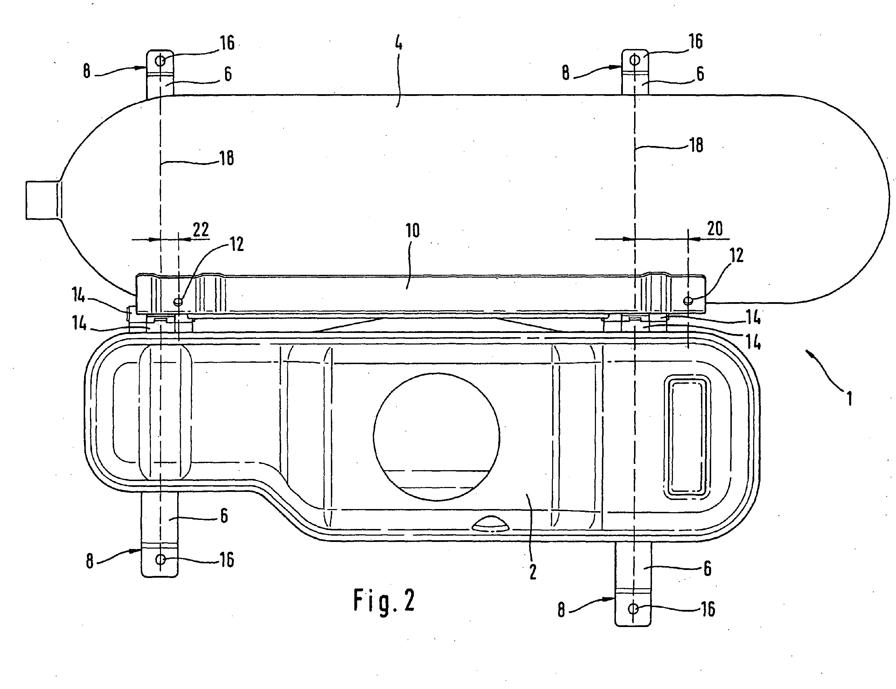

In Fig. 2 ist die in Fig. 1 veranschaulichte Ausführungsform in einer Ansicht von oben durch den nicht näher dargestellten Unterbau hindurch gezeigt. Gleiche Bezugszeichen beziehen sich auf gleiche oder gleich wirkende Bauteile oder Elemente. Die gedachte gemeinsame Verbindungslinie der äußeren ersten Montagepunkte ist hier mit der Bezugsziffer 18 als gestrichelte Linie eingezeichnet. Der mit der erfindungsgemäßen Befestigungsvorrichtung erzielbare Versatzausgleich bezüglich der zwischen den beiden äußeren ersten paarweise in Fahrzeuglängsrichtung zueinander fluchtenden Montagepunkten und dem an einer tragfähigen Stelle in den Unterbau nachträglich einzubringenden zweiten Montagepunkt ist durch den Abstandspfeil 20 symbolisiert.

Hier wird unmittelbar deutlich, dass die äußeren ersten Montagepunkte (symbolisiert durch die Bohrungen 16 in den äußeren Spannbandenden 8) auch auf der gemeinsamen gedachten Verbindungslinie 18 liegen, und dass auch die zweiten Spannbandenden 14, die zwischen den beiden Behältern 2 bzw. 4 am Spannbandmontageadapter 10 befestigt sind, ebenfalls jeweils im Wesentlichen versatzfrei miteinander fluchtend auf dieser gedachten Linie 18 zu liegen kommen. D.h. der mit dem Abstandspfeil 20 bzw. 22 symbolisierte Versatz zwischen den ersten und zweiten Montagepunkten wird vermittels des Spannbandmontageadapters 10 auf Null reduziert.

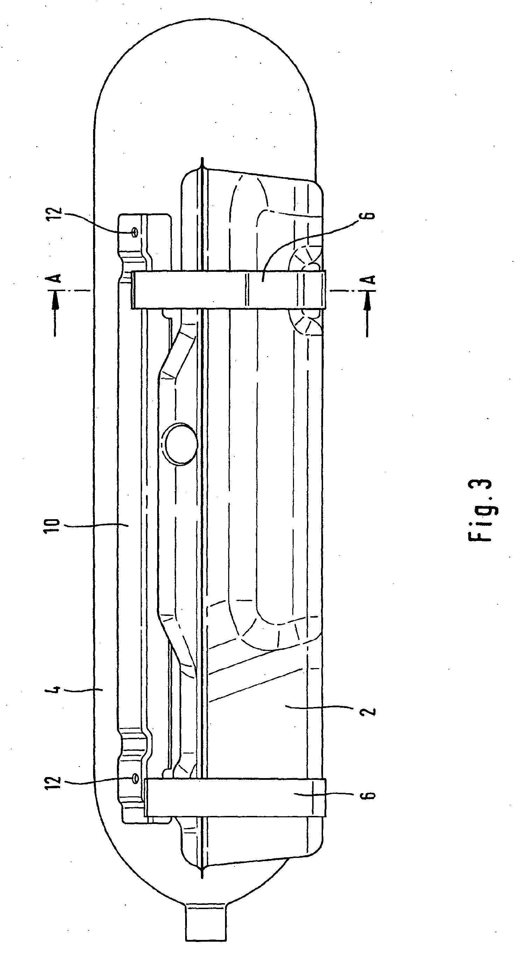

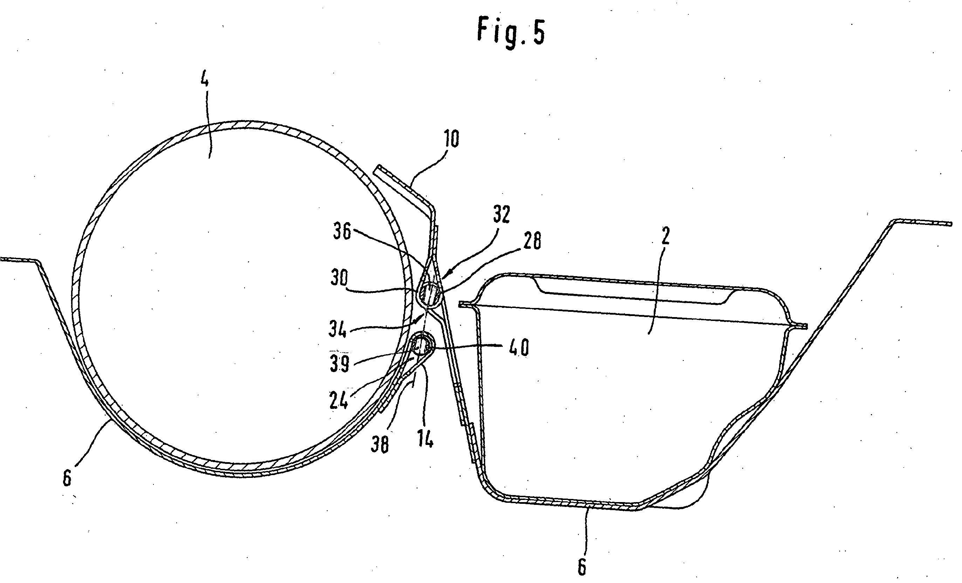

Die in Figuren 1 und 2 in dreidimensionaler Ansicht bzw. von oben dargestellte Ausführungsform ist in Fig. 3 in einer Ansicht von vorne gegen die Fahrzeugrichtung dargestellt. Die gestrichelte Linie A-A versinnbildlicht einen Schnitt durch die betreffende Sektion, der dann in Fig. 5 gezeigt ist. Insbesondere aus Fig. 3 wird die relativ kompakte, platzsparende Anordnung der beiden Behälter 2 und 4 deutlich.

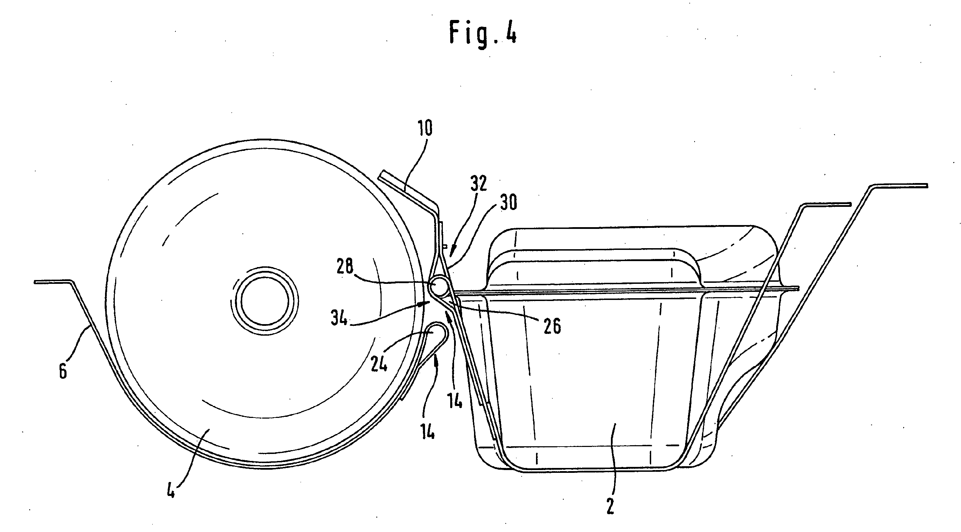

Die in Figuren 1 bis 3 gezeigte Ausführungsform ist in Fig. 4 in einer Seitenansicht von der Beifahrerseite her betrachtet dargestellt. Das Spannband 6 der Gasflasche 4 endet zwischen den beiden Behältern 2 bzw. 4. Dessen zweites, nach innen orientiertes Spannbandende 14 ist in Form einer Schlaufe 24 ausgebildet. Gleiches gilt für das nach innen orientierte zweite Ende 14 des Spannbandes 6 des Benzin-Nottanks 2. Auch dieses ist als eine Schlaufe 26 ausgebildet. Die Schlaufe 26 umschlingt einen Verbindungsbolzen 28. Der Verbindungsbolzen 28 ist seinerseits in einer als Schlaufe 30 ausgebildeten Befestigungseinrichtung 32 des Spannbandmontageadapters 10 gehalten, wobei der Verbindungsbolzen 28 derart in der Schlaufe 30 ruht, dass er sich um seine Längsachse drehen kann. Gleichermaßen kann die Schlaufe 26, die am Verbindungsbolzen 28 eingehängt ist, um diesen gedreht werden. Damit ist sicher gestellt, dass an dieser Stelle bei der Übertragung der aufzunehmenden Zugkräfte keine Knickmomente entstehen. Die Befestigungseinrichtungen 32, die vorzugsweise als Schlaufen 30 ausgestaltet werden, sind am unteren Rand 34 des Spannbandmontageadapters 10 ausgebildet, wobei dieser untere Rand 34 hier nach unten vom Unterbau wegweist.

Fig. 5 zeigt in einem Schnitt durch die Sektion A-A die in Figuren 1 bis 4 veranschaulichte Ausführungsform. Zwischen den Behältern 2 bzw. 4, die soweit als möglich von den Spannbändern 6 umfasst und damit bestmöglich fixiert sind, ist der Spannbandmontageadapter 10 angeordnet. An dessen unterem Rand 34 ist eine als Schlaufe 30 ausgebildete Befestigungseinrichtung 32 angeordnet. Innerhalb der Schlaufe 30 ist der Verbindungsbolzen 28 gehalten. Der Verbindungsbolzen 28 weist eine senkrecht zu seiner Erstreckungsrichtung orientierte Gewindebohrung 36 oder Mutter auf, in welche eine hier durch eine unterbrochene Linie 38 dargestellte Spannschraube eingreift, wobei diese Spannschraube 38 ihrerseits vom zweiten Spannbandende 14 eines der Spannbänder, vorzugsweise des der Gasflasche 4 zugeordneten Spannbandes 6, in eine entsprechende Gewindebohrung 39 eines der an diesem Spannbandende 14 ausgebildeten Lasche 24 um dessen Längsachse drehbar gelagerten zweiten Verbindungsbolzen 40 eingreift. Die Spannschraube 38 und die Gewindebohrungen 36, 39 sind derart ausgebildet, dass beim Verdrehen der Spannschraube 38 die Verbindungsbolzen 28, 40 zu- oder gegeneinander entlang der Linie 38 (Spannschraube) bewegt werden, wodurch das Spannband 6 zur Fixierung des Behälters 4 gespannt wird.

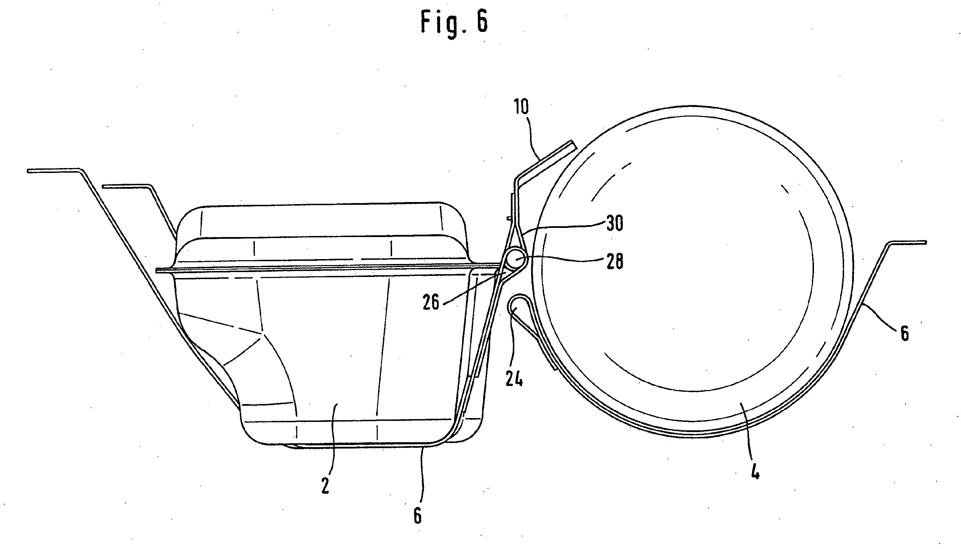

In Fig. 6 ist eine weitere Seitenansicht der Ausführungsform - dieses Mal von der Fahrerseite her - dargestellt. Auch hier bezeichnen die gleichen Bezugszeichen gleiche bzw. ähnlich wirkende Bauteile bzw. Elemente wie in den vorstehend diskutierten Figuren.

Die vorliegende Erfindung schafft erstmals eine Befestigungsvorrichtung für zwei benachbarte Behälter, wie beispielsweise Kraftstofftanks, Gasflaschen, oder dergleichen, die am Unterbau der Karosserie eines Kraftfahrzeuges befestigt werden sollen. Die beiden Behälter werden mit wenigstens zwei den jeweiligen Behälter fixierenden Spannbändern fixiert, die jeweils mit einem ersten von den Behältern wegweisenden Spannbandende an bereits im Unterbau befindlichen ersten Montagepunkten befestigt sind. Diese ersten Montagepunkte liegen paarweise in Fahrzeuglängsrichtung zueinander fluchtend vor. Die Längsachse des jeweiligen Behälters ist vorzugsweise quer zur Fahrzeuglängsachse orientiert. Dabei ist erstmals vorgesehen, dass zwischen den beiden Behältern ein Spannbandmontageadapter angeordnet ist. Dieser erstreckt sich parallel zur Längsachse wenigstens eines der Behälter. Der Spannbandmontageadapter ist an in den Unterbau an tragfähigen Stellen einzubringenden zweiten Montagepunkten befestigt, welche zwischen den beiden äußeren ersten Montagepunkten und nicht mit diesen auf einer gemeinsamen Linie liegen. Dabei sind die jeweiligen zweiten nach innen zwischen die beiden Behälter weisenden Spannbandenden derart an Spannbandmontageadapter montiert, dass diese entlang der gemeinsamen Verbindungslinie der äußeren ersten Montagepunkte im Wesentlichen versatzfrei miteinander fluchtend verlaufen.

### Bezugszeichenliste

- 1: Befestigungsvorrichtung
- 2: Behälter (Benzin-Nottank)
- 4: Behälter (Gasflasche)
- 6: Spannband
- 8: Erste Spannbänder
- 10: Spannbandmontageadapter
- 12: Bohrungen
- 14: Zweite Spannbänder
- 16: Bohrungen
- 18: Gestrichelte Linie
- 20: Abstandspfeil(Versatzsymbol)
- 22: Abstandspfeil(Versatzsymbol)
- 24: Schlaufe
- 26: Schlaufe
- 28: Verbindungsbolzen
- 30: Schlaufe
- 32: Befestigungseinrichtung
- 34: Rand
- 36: Gewindebohrung
- 37: Gewindebohrung
- 38: Spannschraube
- 39: Gewindebohrung
- 40: Verbindungsbolzen

## Patentansprüche

1. Befestigungsvorrichtung (1) für zwei benachbarte Behälter (2, 4), wie beispielsweise Kraftstofftanks, Gasflaschen, oder dergleichen, am Unterbau der Karosserie eines Kraftfahrzeuges, mit wenigstens zwei den jeweiligen Behälter (2, 4) fixierenden Spannbändern (6), die jeweils mit einem ersten von den Behältern (2, 4) wegweisenden Spannbandende (8) an bereits im Unterbau befindlichen ersten Montagepunkten befestigt sind, welche paarweise in Fahrzeuglängsrichtung zueinander fluchtend vorliegen, und wobei die Längsachse des jeweiligen Behälters (2, 4) vorzugsweise quer zur Fahrzeuglängsachse orientiert ist, **dadurch gekennzeichnet, dass** zwischen den beiden Behältern (2, 4) ein Spannbandmontageadapter (10) angeordnet ist, der an in den Unterbau an tragfähigen Stellen einzubringenden zweiten Montagepunkten befestigt ist, die zwischen den beiden äußeren ersten Montagepunkten liegen, wobei die jeweiligen zweiten nach innen zwischen die beiden Behälter (2, 4) weisenden Spannbandenden (14) am Spannbandmontageadapter (10) montiert sind.

2. Befestigungsvorrichtung (1) nach Anspruch 1, **dadurch gekennzeichnet, dass** der Spannbandmontageadapter (10) sich parallel zur Längsachse wenigstens eines der Behälter (2, 4) erstreckt.

3. Befestigungsvorrichtung (1) nach Anspruch 1 oder 2, **dadurch gekennzeichnet, dass** die zweiten Montagepunkten nicht mit den ersten Montagepunkten auf einer gemeinsamen Linie (18) liegen, die jeweils die ersten Montagepunkten in Fahrzeuglängsrichtung miteinander verbindet.

4. Befestigungsvorrichtung (1) nach einem der Ansprüche 1 bis 3, **dadurch gekennzeichnet, dass** die jeweiligen zweiten nach innen zwischen die beiden Behälter (2, 4) weisenden Spannbandenden (14) entlang der gemeinsamen Verbindungslinie (18) der äußeren ersten Montagepunkte im wesentlichen versatzfrei miteinander fluchtend verlaufen.

5. Befestigungsvorrichtung (1) nach einem der Ansprüche 1 bis 4, **dadurch gekennzeichnet, dass** der Spannbandmontageadapter (10) als Profilblech, vorzugsweise als Winkelblech ausgebildet ist.

6. Befestigungsvorrichtung (1) nach einem der Ansprüche 1 bis 5, **dadurch gekennzeichnet, dass** der Spannbandmontageadapter (10) an seinem nach unten vom Unterbau wegweisenden Rand (34) Befestigungseinrichtungen (32) aufweist, die vorzugsweise als Schlaufen (30) ausgebildet sind.

7. Befestigungsvorrichtung (1) nach Anspruch 6, **dadurch gekennzeichnet, dass** die Befestigungseinrichtungen (32) des Spannbandmontageadapters (10) derart an dessen unterem Rand (34) platziert sind, dass sie jeweils in einer Linie (18) zu paarweise fluchtenden ersten äußeren Montagepunkten zu liegen kommen.

8. Befestigungsvorrichtung (1) nach einem der Ansprüche 1 bis 7, **dadurch gekennzeichnet, dass** ein, vorzugsweise zylindrischer, Verbindungsbolzen (28) von der Schlaufe (30) des Spannbandmontageadapters (10) gehalten ist, der seinerseits mit einem entsprechend in den Schlaufen (24, 26) an den zweiten nach innen zwischen die beiden Behälter weisenden Spannbandenden (14) gehaltenen Verbindungsbolzen (40) im Eingriff steht.

9. Befestigungsvorrichtung (1) nach Anspruch 8, **dadurch gekennzeichnet, dass** der Verbindungsbolzen (28) eine senkrecht zu seiner Erstreckungsrichtung orientierte Gewindebohrung (36) aufweist, in welche eine Spannschraube (38) eingreift, die ihrerseits am zweiten Spannbandende (14) eines der Spannbänder (6), vorzugsweise des der Gasflasche (4) zugeordneten Spannbandes (6), in eine entsprechende Gewindebohrung (39) eines in der Schlaufe (24) um dessen Längsachse drehbar gelagerten zweiten Verbindungsbolzen (40) eingreift.
